# EUROPÄISCHE PATENTANMELDUNG

(11) **EP 4 589 189 A1**
(43) Veröffentlichungstag der Anmeldung: **23.07.2025**
(21) Anmeldenummer: 24152563.3
(22) Anmeldetag: 18.01.2024
(51) Int. Cl.: F16P 3/14, F16P 1/02

(54) **SCHUTZGEHÄUSE FÜR EINE VERARBEITUNGSANLAGE, VERARBEITUNGSANLAGE MIT EINEM DERARTIGEN SCHUTZGEHÄUSE UND VERSTELLBARE BLENDENVORRICHTUNG FÜR EIN DERARTIGES SCHUTZGEHÄUSE**

(71) Anmelder: SOMIC Verpackungsmaschinen GmbH & Co. KG, 83123 Amerang (DE)
(72) Erfinder: Lipp, Josef, 83561 Ramerberg (DE); Dr. Härtl, Johann, 83101 Rohrdorf (DE)
(74) Vertreter: Weickmann & Weickmann PartmbB

(57) **Zusammenfassung**

Die Erfindung betrifft ein Schutzgehäuse (110) für eine Verarbeitungsanlage (100), wobei das Schutzgehäuse (110) wenigstens eine Schleuse (112) umfasst, durch welche im Betrieb der Verarbeitungsmaschine (100) Gegenstände in den Innenraum (110a) des Schutzgehäuses (110) hinein und/oder aus diesem heraus transferiert werden können, und wobei der Schleuse (112) bzw. wenigstens einer der Schleusen eine verstellbare Blendeneinrichtung (122) mit wenigstens einer verstellbaren Blendeneinheit (124) zugeordnet ist, mittels derer die Größe der für den Durchtritt der Gegenstände verfügbaren Öffnungsfläche (120ist) der jeweiligen Schleuse (112) einstellbar ist. Erfindungsgemäß ist der wenigstens einen Blendeneinheit (124) ein Sensor (126) zugeordnet, der dazu ausgebildet und bestimmt ist, den Wert eines ein Verstellen oder den Versuch eines Verstellens der Blendeneinheit (124) anzeigenden Parameters zu erfassen und an einem Signalausgang (126a) des Sensors (126) ein entsprechendes Erfassungssignal bereitzustellen. Die Erfindung betrifft ferner eine Verarbeitungsanlage mit und eine Blendenvorrichtung für ein derartiges Schutzgehäuse.

## Beschreibung

Die Erfindung betrifft ein Schutzgehäuse für eine nicht zum Anspruchsgegenstand gehörende Verarbeitungsanlage, wobei das Schutzgehäuse wenigstens eine Schleuse umfasst, durch welche im Betrieb der Verarbeitungsmaschine ebenfalls nicht zum Anspruchsgegenstand gehörende Gegenstände in den Innenraum des Schutzgehäuses hinein und/oder aus diesem heraus transferiert werden können, und wobei der Schleuse bzw. wenigstens einer der Schleusen eine verstellbare Blendeneinrichtung mit wenigstens einer verstellbaren Blendeneinheit zugeordnet ist, mittels derer die Größe der für den Durchtritt der Gegenstände verfügbaren Öffnungsfläche der jeweiligen Schleuse einstellbar ist,

Schutzgehäuse mit derartigen Schleusen sind aus dem Stand der Technik allgemein bekannt.

Auch wenn die Erfindung ganz allgemein bei Verarbeitungsanlagen eingesetzt werden kann, die wenigstens eine Zuführung von Gegenständen, beispielsweise von Materialien, aus denen fertige Produkte oder Halbzeuge hergestellt werden, von Halbzeugen, aus denen fertige Produkte hergestellt werden, und dergleichen mehr, und/oder wenigstens eine Abführung von Gegenständen aufweisen, sollen der Stand der Technik, dessen Probleme und die erfindungsgemäße Lösung nachstehend am Beispiel einer Verpackungsanlage erläutert werden, insbesondere am Beispiel einer Schleuse, durch welche Kartonzuschnitte in die Verpackungsanlage eingeführt werden.

Die maximale Öffnungsfläche dieser Schleuse ist in Abhängigkeit von der Fläche des größten Kartonzuschnitts gewählt, der mit der Verpackungsanlage verarbeitet werden kann. Um bei kleineren Formaten von Kartonzuschnitten den Zugriff in den Gefahrenbereich der Verpackungsanlage, d.h. in den Innenraum des Schutzgehäuses, verhindern zu können, muss die jeweils verfügbare Öffnungsfläche an die Größe des jeweils durch die Schleuse einzuleitenden Kartonzuschnitts angepasst werden. Hierzu werden üblicherweise verstellbare Blendeneinrichtungen eingesetzt. Diese können jedoch möglicherweise manipuliert werden, um sich durch Wegdrücken oder dergleichen der Blendeneinheit(en) der Blendeneinrichtung doch Zugriff auf den Innenraum des Schutzgehäuses zu verschaffen.

Es ist Aufgabe der vorliegenden Erfindung, hier Abhilfe zu schaffen.

Diese Aufgabe wird erfindungsgemäß durch ein Schutzgehäuse der eingangs genannten Art gelöst, bei welchem der wenigstens einen Blendeneinheit ein Sensor zugeordnet ist, der dazu ausgebildet und bestimmt ist, den Wert eines ein Verstellen oder den Versuch eines Verstellens der Blendeneinheit anzeigenden Parameters zu erfassen und an einem Signalausgang des Sensors ein entsprechendes Erfassungssignal bereitzustellen.

Durch den Einsatz des erfindungsgemäß vorgesehenen Sensors und das von ihm bereitgestellte Erfassungssignal ist es möglich, unzulässige Versuche, sich Zugriff auf den Innenraum des Schutzgehäuses zu verschaffen, zu erfassen, gewünschtenfalls dem verantwortlichen Personal mitzuteilen, jedenfalls aber geeignete Gegenmaßnahmen einzuleiten, um die Verarbeitungsanlage in einen sicheren Zustand zu versetzen, insbesondere einen Nothalt der Maschine auszulösen.

An dieser Stelle sei nochmals betont, dass die Erfindung nicht auf Verpackungsanlagen beschränkt ist, sondern mit Vorteil bei allen Verarbeitungsmaschinen eingesetzt werden kann, die eine Materialzuführung oder -abtransport aufweisen.

Um die Schleuse an eine Vielzahl unterschiedlicher Arte von Gegenständen anpassen zu können, wird vorgeschlagen, dass einer ersten Richtung und/oder einer die erste Richtung unter einem von Null verschiedenen Winkel schneidenden zweiten Richtung der Schleuse jeweils wenigstens eine verstellbare Blendeneinheit zugeordnet ist. Die erste Richtung kann dabei beispielsweise die Höhenrichtung der Schleuse sein, während die zweite Richtung beispielsweise die Breitenrichtung der Schleuse sein kann. In diesem Fall verlaufen die beiden Richtungen im Wesentlichen orthogonal zueinander.

Um nicht nur die Größe, sondern auch die Position der für den Durchtritt der Gegenstände verfügbaren Öffnungsfläche der Schleuse einstellen zu können, wird ferner vorgeschlagen, dass der ersten Richtung und/oder der zweiten Richtung der Schleuse wenigstens zwei verstellbare Blendeneinheiten zugeordnet sind. Grundsätzlich ist es zwar denkbar, wenigstens eine der verstellbaren Blendeneinheiten in wenigstens zwei verstellbare Blendenuntereinheiten zu unterteilen, von denen in Abhängigkeit der jeweiligen Öffnungsfläche gegebenenfalls nur eine verstellt zu werden braucht. Um eine freie Wahl sowohl der Größe als auch der Position einer im Wesentlichen rechteckigen Öffnungsfläche ermöglichen zu können, genügen jedoch vier verstellbare Blendenvorrichtungen, beispielsweise eine obere Blendenvorrichtung, eine untere Blendenvorrichtung, eine rechte Blendenvorrichtung und eine linke Blendenvorrichtung. Für jede Kante des Rechtecks, deren Lage fest vorgegeben ist, kann eine dieser Blendenvorrichtungen entfallen.

Um einen nicht zur Einschränkung der Öffnungsfläche der Schleuse verwendeten Abschnitt der Blendeneinheit der Schleuse benachbart unterbringen zu können, wird vorgeschlagen, dass wenigstens eine verstellbare Blendeneinheit ein aufwickelbares Blendenelement umfasst. Für Schiebepaneele müsste beispielsweise um die Schleuse herum ein den Abmessungen des jeweiligen Schiebepaneels entsprechender Raum zur Verfügung gestellt werden, der nicht anderweitig genutzt werden könnten. Dieser Nachteil wird durch die Aufwickellösung vermieden.

Eine besonders raumsparende Anordnung ergibt sich, wenn das aufwickelbare Blendenelement ein Industrierollo umfasst. Industrierollos haben gegenüber Lamellenvorhängen und dergleichen den Vorteil einer besonders geringen Dicke, was ihr raumsparendes Aufwickeln ermöglicht. Gleichwohl sind sie robust genug, um nicht einfach durchstoßen werden zu können, so dass der Versuch, sie zu manipulieren, von dem Sensor zuverlässig erfasst werden kann.

Zur Erhöhung der Erfassungssicherheit wird ferner vorgeschlagen, dass das wenigstens eine verstellbare Blendeneinheit ein Federelement umfasst, welches das zugehörige Blendenelement in seine die Öffnung der Schleuse freigebende Stellung vorspannt. Hierdurch kann das Blendenelement stets auf Spannung gehalten werden, so dass für den Sensor ein definierter Ausgangszustand bereitgestellt werden kann, der einem von Manipulationsversuchen freien Zustand entspricht.

Ist das Blendenelement ein aufwickelbares Blendenelement, so ist es vorteilhaft, wenn der Sensor ein Drehwinkelsensor ist. Bei Einsatz eines Drehwinkelsensors wird eine Linearbewegung des Blendenelement, beispielsweise eine Änderung der Auszugslänge des Blendenelements, in eine Drehbewegung des Drehwinkelsensors umgesetzt. Dies gilt insbesondere auch bei dem Versuch, das Blendenelement wegzuziehen oder wegzudrücken, da dabei das Blendenelement ausgebeult oder verschoben wird. Die Umsetzung kann beispielsweise mittels eines Zahnstangen-Ritzel-Mechanismus erfolgen. Im Falle eines aufwickelbaren Blendenelements kann der drehbare Teil des Drehwinkelsensors unmittelbar mit der Welle des Aufwickelmechanismus verbunden sein. Drehwinkelsensoren können bereits kleine Winkelveränderungen erfassen, so dass anhand ihres Erfassungssignals bereits Verstellungen des Blendenelements erfasst werden können, die noch kein Durchgreifen der durch diese Verstellung erzeugten Erweiterung der Öffnungsfläche mit einer menschlichen Hand erlauben. Nachzutragen ist noch, dass vorzugsweise ein Drehwinkelsensor eingesetzt wird, der nicht nur Veränderungen des Drehwinkels, sondern auch den Absolutwert des Drehwinkels erfassen kann. Auf diese Weise kann auch die jeweils eingestellte Position der zugehörigen Blendeneinheit erfasst werden.

Alternativ ist es jedoch auch denkbar, dass der Sensor ein Drucksensor, beispielsweise ein piezoelektrischer Sensor, ist. Drucksensoren und/oder piezoelektrische Sensoren erlauben im Vergleich zu Drehwinkelsensoren das Erfassen bereits des Versuchs einer Verstellung, ohne dass die Verstellbewegung tatsächlich schon begonnen hat. Dies ermöglicht im Vergleich zu Drehwinkelsensoren eine frühere Erfassung von Verstellversuchen. Allerdings erweist sich die Kopplung derartiger Drucksensoren und/oder piezoelektrische Sensoren mit den ortsfesten und beweglichen Teilen der Blendeneinheit als aufwändiger.

In Weiterbildung der Erfindung wird vorgeschlagen, dass dem freien Ende wenigstens einer verstellbaren Blendeneinheit ein Kraftgerät zugeordnet ist, welches dazu ausgelegt und bestimmt ist, dieses freie Ende in eine der gewünschten Öffnungsfläche entsprechende Position einzustellen. Dieses Kraftgerät kann beispielsweise einen Spindeltrieb umfassen. Spindeltriebe haben dabei den Vorteil, dass sie die einmal eingestellte Position aufgrund ihrer Selbsthemmung in einfacher Weise beibehalten können.

Nachzutragen ist noch, der Sensor ferner dazu ausgebildet und bestimmt sein kann, die eingestellte Position der wenigstens einen Blendeneinheit zu erfassen. Hierdurch kann beispielsweise überwacht werden, ob die Größe der für den Durchtritt der Gegenstände verfügbaren Öffnungsfläche der jeweiligen Schleuse den vorgegebenen Wert aufweist. Somit kann beispielsweise verhindert werden, dass zwischen den durch die Schleuse hindurchtretenden Gegenständen und der Blendeneinheit ein zu großer Spalt verbleibt. Im Falle der Verwendung eines Drehwinkelsensors als Sensor kann dies in besonders einfacher Weise realisiert werden.

Zusätzlich oder alternativ kann aber auch ein weiterer Sensor vorgesehen sein, der dazu ausgebildet und bestimmt ist, die eingestellte Position der wenigstens einen Blendeneinheit zu erfassen. Auf diese Variante könnte beispielsweise im Falle der Verwendung eines Drucksensors als Sensor zurückgegriffen werden.

Gemäß einem weiteren Gesichtspunkt betrifft die Erfindung eine Verarbeitungsanlage mit einem Schutzgehäuse nach einem der vorhergehenden Ansprüche und einer Steuereinheit, welche über einen mit dem Signalausgang des Sensors verbundenen Signaleingang verfügt und dazu ausgebildet und bestimmt ist, dann, wenn der Wert des ihr über den Signaleingang übermittelten Erfassungssignals des Sensors einen vorbestimmten Schwellenwert übersteigt, geeignete Maßnahmen einzuleiten. Die geeignete Maßnahme kann dabei beispielsweise in der Ausgabe eines akustischen und/oder optischen Warnsignals und/oder in der Herbeiführung einer Notabschaltung der gesamten Verarbeitungsanlage bestehen.

Wie bereits vorstehend angemerkt wurde, kann die Verarbeitungsanlage beispielsweise eine Verpackungsanlage sein, welche eine Schleuse zum Einschleusen unverpackter Produkte und/oder eine Schleuse zum Einschleusen von Kartonzuschnitten, aus denen die Verpackungskartons für die Produkte gefaltet werden, und/oder eine Schleuse zum Ausschleusen der in den Kartons verpackten Produkte-aufweisen.

Nach einem weiteren Gesichtspunkt betrifft die Erfindung eine verstellbare Blendenvorrichtung mit Merkmalen, wie sie in der vorstehenden Diskussion des erfindungsgemäßen Schutzgehäuses beschrieben worden sind.

Die Erfindung wird im Folgenden anhand eines Ausführungsbeispiels mit Bezug auf die begleitenden Zeichnungen näher erläutert werden. Es stellt dar:
- Figur 1: eine perspektivische Ansicht eines erfindungsgemäßen Schutzgehäuses mit einer darin angeordneten Verarbeitungsanlage und einer Schleuse zum Einbringen von Kartonzuschnitten in das Schutzgehäuse;
- Figur 2: eine Frontalansicht der Schleuse aus Figur 1; und
- Figur 3: eine perspektivische Ansicht einer Blendeneinheit wie sie bei der der Schleuse aus Figur 2 zugeordneten Blendenvorrichtung zum Einsatz kommt.

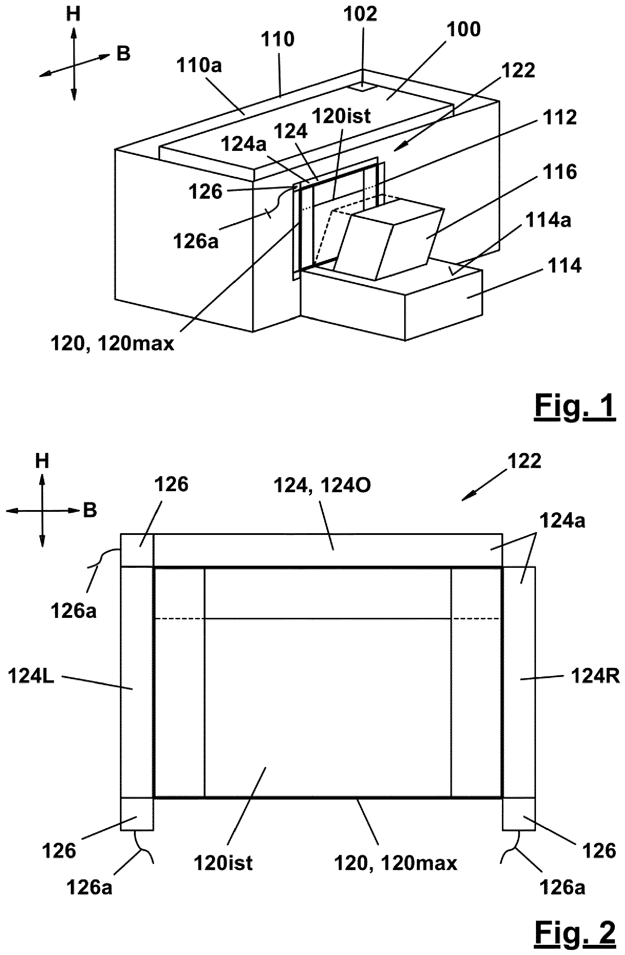

In der grob schematisch gehaltenen Figur 1 ist eine Verarbeitungsanlage mit 100 und das diese umgebende Schutzgehäuse mit 110 bezeichnet.

In dem dargestellten Ausführungsbeispiel ist die Verarbeitungsanlage 100 eine Verpackungsanlage, der über eine Schleuse 112 aus einem Magazin 114 flächige Kartonzuschnitte 116 zugeführt werden. In der Verpackungsanlage 100 werden aus den flächigen Kartonzuschnitten 116 Kartons gefaltet, in denen in Figur 1 nicht dargestellte Gegenstände, insbesondere Handelsprodukte, in Gebinden verpackt werden. Auch für die Zuführung der unverpackten Gegenstände und den Abtransport der verpackten Gegenstände sind der Schleuse 112 vergleichbare Schleusen vorgesehen. Diese sind in Figur 1 aber der Übersichtlichkeit halber nicht dargestellt.

An dieser Stelle sei ferner darauf hingewiesen, dass zum einen die Details der an sich bekannten Konstruktion des Magazins 114 nicht dargestellt wurden und zum anderen die dem Schutzgehäuse 110 nächstgelegenen Kartonzuschnitte 116 lediglich gestrichelt angedeutet wurden, um den Blick auf die Schleuse 112 nicht zu versperren. Zudem ist die Schleuse 112 in Figur 2 vergrößert und in Frontalansicht dargestellt.

Die Schleuse 112 weist, wie in den Figuren 1 und 2 dargestellt ist, eine Öffnung 120 mit einer maximalen Öffnungsfläche 120max auf. Diese maximale Öffnungsfläche 120max gibt die maximalen Abmessungen für Kartonzuschnitte 116 vor, die durch die Schleuse 112 in den Innenraum 110a des Schutzgehäuses 110 eingeführt werden können. Gemäß Figur 1 weisen die aktuell in das Schutzgehäuse 110 einzuführenden Kartonzuschnitte 116 jedoch eine Fläche auf, die kleiner ist als maximale Öffnungsfläche 120max. Neben den Kartonzuschnitten 116 würde also ein Spalt verbleiben, durch den ein Eingriff in den Innenraum 110a des Schutzgehäuses 110 möglich wäre. Ein derartiger Eingriff muss aus Sicherheitsgründen unter allen Umständen vermieden werden.

Daher ist der Schleuse 112 eine verstellbare Blendenvorrichtung 122 zugeordnet, welche es ermöglicht, eine tatsächliche Öffnungsfläche 120ist der Öffnung 120 derart zu begrenzen, dass sie im Wesentlichen der Gestalt der flächigen Kartonzuschnitte entspricht. Hierzu verfügt die Blendenvorrichtung 122 im einfachsten Fall über eine verstellbare Blendeneinheit, im dargestellten Ausführungsbeispiel jedoch über drei verstellbare Blendeneinheiten 124, nämlich eine obere Blendeneinheit 1240, eine linke Blendeneinheit 124L und eine rechte Blendeneinheit 124R (siehe Figur 2).

Die obere Blendeneinheit 1240 begrenzt die Abmessung der tatsächlichen Öffnungsfläche 120ist in Höhenrichtung H. Eine untere Blendeneinheit ist nicht vorgesehen, da die Unterkante der tatsächlichen Öffnungsfläche 120ist stets auf gleicher Höhe wie die Oberkante eines Montagetischs 114a des Magazins 114 angeordnet ist (siehe Figur 1). Die linken und rechten Blendeneinheiten 124L, 124R begrenzen die Abmessung der tatsächlichen Öffnungsfläche 120ist in Breitenrichtung B.

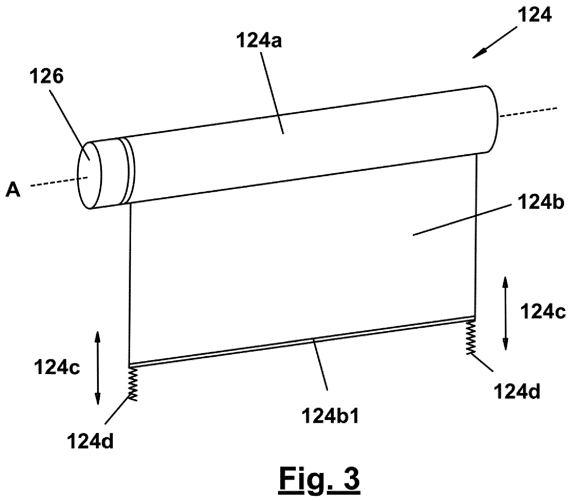

In Figur 3 ist eine beispielhafte Blendeneinheit 124 im Detail dargestellt. Da die in Figur 2 dargestellten Blendeneinheiten 1240, 124L, 124R von der Grundkonstruktion alle gleich ausgebildet sind, kann die Beschreibung der Blendeneinheit 124 auf jede von ihnen übertragen werden.

Wie in Figur 3 dargestellt ist, ist die Blendeneinheit 124 als um eine Achse A aufwickelbarer Industrierollo ausgebildet. Industrierollos haben gegenüber den grundsätzlich ebenfalls aufwickelbaren Lamellenvorhängen den Vorteil, im aufgewickelten Zustand weniger Platz in Anspruch zu nehmen. Das Aufnahmegehäuse 124a zur Unterbringung der aufgewickelten Blendeneinheit 124 ist gemäß Figur 1 unmittelbar neben der Öffnung 120max am Schutzgehäuse 112 angeordnet.

In Verlängerung der Achse A ist dem Aufnahmegehäuse 124a unmittelbar benachbart ein Sensor 126, beispielsweise ein Drehwinkelsensor, angeordnet. Genauer gesagt, ist der ortsfeste Teil 126b des Sensors 126 betriebsfest mit dem Aufnahmegehäuse 124a verbunden, während der (in Figur 3 nicht zu sehende) rotierende Teil des Sensors 126 betriebsfest mit der (in Figur 3 ebenfalls nicht zu sehenden) Welle der Blendeneinheit 124 verbunden ist.

Über einen Signalausgang 126a kann einer Steuereinheit102 der Verarbeitungsanlage ein Erfassungssignal des Sensors 126 übermittelt werden. Dieses Erfassungssignal kann Informationen sowohl über den absoluten Drehwinkel enthalten als auch Informationen über die Drehwinkeländerung bzw. Drehwinkelgeschwindigkeit, d.h. die zeitliche Ableitung des Drehwinkels. In Abhängigkeit von dem Erfassungssignal, insbesondere dann, wenn der Wert der Drehwinkeländerung einen vorbestimmten Schwellenwert übersteigt, kann die Steuereinheit 102 geeignete Maßnahmen einleiten, beispielsweise einen Nothalt der Verarbeitungsanlage 100 auslösen oder diese zumindest in einen sicheren Betriebszustand überführen.

Die Welle der Blendeneinheit 124 fällt im Wesentlichen mit der Achse A zusammen. An ihr ist das innere freie Ende des flexiblen Blendenmaterials 124b befestigt, und um sie wird das aktuell nicht als Blende dienende Blendenmaterial 124b spiralförmig aufgewickelt. Die Verstellung des äußeren freien Endes 124b1 des Blendenmaterials 124b wird mittels eines in Figur 3 durch Doppelpfeile angedeuteten Kraftgeräts 124c bewerkstelligt. Dieses Kraftgerät 124c kann beispielsweise ein Motor sein, insbesondere ein Elektromotor oder ein pneumatisch und/oder hydraulisch betriebener Motor.

Das Kraftgerät 124c kann entweder in dem Aufnahmegehäuse 124a untergebracht sein und auf die Welle der Blendeneinheit 124 einwirken. In diesem Fall wird das Blendenmaterial 124b mittels einer auf dessen freies Ende 124b1 einwirkende Feder 124d auf Spannung gehalten. Alternativ kann das Kraftgerät 124c aber auch auf das freie Ende 124b1 des Blendenmaterials 124b einwirken. In diesem Fall kann die Feder 124d eine Spiralrückholfeder sein, die das Blendenmaterial 124b auf die Welle zurück aufzuwickeln versucht.

## Patentansprüche

1. Schutzgehäuse (110) für eine nicht zum Anspruchsgegenstand gehörende Verarbeitungsanlage (100),
wobei das Schutzgehäuse (110) wenigstens eine Schleuse (112) umfasst, durch welche im Betrieb der Verarbeitungsmaschine (100) ebenfalls nicht zum Anspruchsgegenstand gehörende Gegenstände in den Innenraum (110a) des Schutzgehäuses (110) hinein und/oder aus diesem heraus transferiert werden können, und
wobei der Schleuse (112) bzw. wenigstens einer der Schleusen eine verstellbare Blendeneinrichtung (122) mit wenigstens einer verstellbaren Blendeneinheit (124) zugeordnet ist, mittels derer die Größe der für den Durchtritt der Gegenstände verfügbaren Öffnungsfläche (120ist) der jeweiligen Schleuse (112) einstellbar ist,
**dadurch gekennzeichnet, dass** der wenigstens einen Blendeneinheit (124) ein Sensor (126) zugeordnet ist, der dazu ausgebildet und bestimmt ist, den Wert eines ein Verstellen oder den Versuch eines Verstellens der Blendeneinheit (124) anzeigenden Parameters zu erfassen und an einem Signalausgang (126a) des Sensors (126) ein entsprechendes Erfassungssignal bereitzustellen.

2. Schutzgehäuse nach Anspruch 1,
**dadurch gekennzeichnet, dass** einer ersten Richtung (H) und/oder einer die erste Richtung (H) unter einem von Null verschiedenen Winkel schneidenden zweiten Richtung (B) der Schleuse (112) jeweils wenigstens eine verstellbare Blendeneinheit (124) zugeordnet ist.

3. Schutzgehäuse nach Anspruch 2,
**dadurch gekennzeichnet, dass** der ersten Richtung und/oder der zweiten Richtung (B) der Schleuse (112) wenigstens zwei verstellbare Blendeneinheiten (124L, 124R) zugeordnet sind.

4. Schutzgehäuse nach einem der Ansprüche 1 bis 3,
**dadurch gekennzeichnet, dass** wenigstens eine verstellbare Blendeneinheit (124) ein aufwickelbares Blendenelement (124b) umfasst.

5. Schutzgehäuse nach Anspruch 4,
**dadurch gekennzeichnet, dass** das aufwickelbare Blendenelement (124b) ein Industrierollo umfasst.

6. Schutzgehäuse nach einem der Ansprüche 1 bis 5,
**dadurch gekennzeichnet, dass** das wenigstens eine verstellbare Blendeneinheit (124) ein Federelement (124d) umfasst, welches das zugehörige Blendenelement (124b) in seine die Öffnung der Schleuse (112) freigebende Stellung vorspannt.

7. Schutzgehäuse nach einem der Ansprüche 1 bis 6,
**dadurch gekennzeichnet, dass** der Sensor (126) ein Drehwinkelsensor ist.

8. Schutzgehäuse nach einem der Ansprüche 1 bis 6,
**dadurch gekennzeichnet, dass** der Sensor ein Drucksensor, beispielsweise ein piezoelektrischer Sensor, ist.

9. Schutzgehäuse nach einem der Ansprüche 1 bis 8,
**dadurch gekennzeichnet, dass** dem freien Ende (124b1) wenigstens einer verstellbaren Blendeneinheit (124) ein Kraftgerät (124c) zugeordnet ist, welches dazu ausgelegt und bestimmt ist, dieses freie Ende (124b1) in eine der gewünschten Öffnungsfläche entsprechende Position einzustellen.

10. Schutzgehäuse nach einem der Ansprüche 1 bis 9,
**dadurch gekennzeichnet, dass** ein weiterer Sensor vorgesehen ist, der dazu ausgebildet und bestimmt ist, die eingestellte Position der wenigstens einen Blendeneinheit (124) zu erfassen, und/oder dass der Sensor (126) ferner dazu ausgebildet und bestimmt ist, die eingestellte Position der wenigstens einen Blendeneinheit (124) zu erfassen.

11. Verarbeitungsanlage (100) mit einem Schutzgehäuse (110) nach einem der vorhergehenden Ansprüche und einer Steuereinheit (102), welche über einen mit dem Signalausgang (126a) des Sensors (126) verbundenen Signaleingang verfügt und dazu ausgebildet und bestimmt ist, dann, wenn der Wert des ihr über den Signaleingang übermittelten Erfassungssignals des Sensors (126) einen vorbestimmten Schwellenwert übersteigt, geeignete Maßnahmen einzuleiten.

12. Verarbeitungsanlage nach Anspruch 11,
**dadurch gekennzeichnet, dass** die Verarbeitungsanlage (100) eine Verpackungsanlage ist, welche eine Schleuse zum Einschleusen unverpackter Produkte und/oder eine Schleuse (112) zum Einschleusen von Kartonzuschnitten (116), aus denen die Verpackungskartons für die Produkte gefaltet werden, und/oder eine Schleuse zum Ausschleusen der in den Kartons verpackten Produkte aufweist.

13. Verstellbare Blendenvorrichtung (122) mit wenigstens einem der Blendenvorrichtungsmerkmale nach einem der Ansprüche 1 bis 12.
